# EUROPÄISCHE PATENTSCHRIFT

(11) **EP 1 316 056 B1**
(45) Veröffentlichungstag und Bekanntmachung des Hinweises auf die Patenterteilung: **23.12.2009**
(21) Anmeldenummer: 01965027.4
(22) Anmeldetag: 22.06.2001
(51) Int. Cl.: G06K 9/00

(54) **VERFAHREN ZUR ARTIKELIDENTIFIZIERUNG**
METHOD FOR IDENTIFYING ARTICLES
PROCEDE D'IDENTIFICATION D'ARTICLES

(30) Priorität: 28.06.2000 DE 10030629
(43) Veröffentlichungstag der Anmeldung: 04.06.2003
(73) Patentinhaber: tesa scribos GmbH, 69126 Heidelberg (DE)
(72) Erfinder: NOEHTE, Steffen, 69469 Weinheim (DE); DIETRICH, Christoph, 69126 Heidelberg (DE); GERSPACH, Matthias, 76646 Bruchsal (DE); LEIBER, Jörn, 22529 Hamburg (DE); STADLER, Stefan, 25474 Hasloh (DE)
(74) Vertreter: Pietruk, Claus Peter
(86) Internationale Anmeldenummer: PCT/EP2001/007119
(87) Internationale Veröffentlichungsnummer: WO 2002/001487

(56) Entgegenhaltungen:
- EP-A1- 0 762 238
- EP-A2- 0 582 251
- DE-A1- 19 802 712
- DE-A1- 19 806 295
- MICHELIN S ET AL: 'FOURIER-TRANSFORM COMPUTER-GENERATED HOLOGRAM: A VARIATION ON THE OFF-AXIS PRINCIPLE' PROCEEDINGS OF THE SPIE, PRACTICAL HOLOGRAPHY VIII, 7-9 FEB. 1994, SAN JOSE, CA, USA Bd. 2176, 1994, BELLINGHAM, VA, US, Seiten 249 - 254, XP002061907
- URQUHART K S ET AL: "COMPUTER-GENERATED HOLOGRAMS FABRICATED BY DIRECT WRITE OF POSITIVE ELECTRON-BEAM RESIST" OPTICS LETTERS, OPTICAL SOCIETY OF AMERICA, WASHINGTON, US, Bd. 18, Nr. 4, 15. Februar 1993 (1993-02-15), Seiten 308-310, XP000339187 ISSN: 0146-9592

## Beschreibung

Die vorliegende Erfindung betrifft die Oberbegriffe der unabhängigen Ansprüche. Damit befaßt sich die vorliegende Anmeldung allgemein mit der Verwendung von Hologrammen zur Identifizierung von Produkten.

Die Verwendung von Hologrammen zur Identifizierung von Produkten ist heute bereits allgemein verbreitet. So ist eine häufige Anwendung die Anbringung von Hologrammen auf Scheckkarten oder Softwarepaketen, um deren Fälschung zu erschweren. Die aus der Anbringung von Hologrammen gewonnene Produktsicherheit basiert auf der vergleichsweise komplizierten Herstellung von Hologrammen, die Produktidentifikation dient also dem Fälschungsschutz.

Häufig ist es jedoch auch erforderlich, nicht nur die Echtheit eines Produktes zu gewährleisten, sondern neben Information über den Hersteller noch weitere, individuelle Information auf dem Produkt anzubringen, z.B. Chargennummern, Lieferwege usw. Hier wird die Produktsicherheit durch bessere Identifikation der Artikel erhöht.

Es gibt bereits optische Codierungen zur Speicherung von Produktinformation, beispielsweise Barcodes und dergleichen.

Diese sind jedoch einerseits leicht zu verfälschen, erzeugen beim Auslesen oftmals Fehler und decken nur mehr unzureichend den Bedarf, wachsende Datenmengen in Produktinformation unterzubringen.

Aus dem Aufsatz "COMPUTER-GENERATED HOLOGRAMS FABRICATED BY DIRECT WRITE OF POSITIVE ELECTRON-BEAM RESIST" von S. URQU-HART et al., OPTICS LETTERS, Bd. 18, Nr. 4, 15. Februar 1993 (1993-02-15), ist es bekannt, ein computergeneriertes Hologramm mittels Elektronenstrahl in geeignete Lacke zu schreiben. Aus "FOURIER-TRANSFORM COMPUTER-GENERATED HOLOGRAM: A VARIATION ON THE OFF-AXIS PRINCIPLE" von S. MICHELIN et al. in SPIE Bd. 2176, Practical Holography VIII, (1994)/249 ist es bekannt, ein digitales Hologramm zu berechnen, einen dem digitalen Hologramm-Muster entsprechenden Ausdruck auf einem Standard-Laserdrucker zu erzeugen und daraus eine Hardcopy auf einem handelsüblichen fotografischen Film zu erzeugen.

Aus der DE 198 02 712 A1 ist eine Vorrichtung und ein Verfahren zur Belichtung von computergenerierten Hologrammen bekannt, wobei von einer Lichtquelle erzeugtes Licht über einen digitalen Lichtprozessor abgelenkt und auf ein Aufzeichnungsmedium geworfen wird.

Die Aufgabe der vorliegenden Erfindung besteht darin, Neues für die gewerbliche Anwendung bereitzustellen.

Aus der EP 0 582 251 A2 ist ein Laserbelichtungsgerät für bildmäßig zu belichtende Druckformen bekannt, bei dem zusätzlich zur Laser-Hauptbelichtung eine Vor- oder Nachbelichtung erfolgt.

Aus der DE 198 06 295 A1 ist ein Zugangsberechtigungs- oder Identifikationsmedium bekannt, bei welchem Information in codierter Form gespeichert wird, nämlich durch computergenerierte holographische Transformation, wobei das beispielsweise mittels Laserdrucker ausgedruckte Bildmuster eingescannt und decodiert werden kann.

Die Lösung dieser Aufgabe wird unabhängig beansprucht. Bevorzugte Ausführungsformen finden sich in den Unteransprüchen.

Die vorliegende Erfindung schlägt somit zunächst ein Verfahren zur Artikelidentifizierung vor, bei welchem Artikelidentifikationsdaten bereitgestellt und ein diesen entsprechendes Muster am Artikel vorgesehen wird, um den Artikel anhand des Musters zu identifizieren, wobei vorgesehen ist, daß artikelidentifizierende Individualdaten einem zweidimensionalen Datenfeld zugeordnet, ein Hologrammmuster unter Zugrundelegung des zweidimensionalen Datenfeldes digital berechnet, eine Intensitätsmodulierung eines Hologrammerzeugungslasereinzelstrahles unter Zugrundelegung des zweidimensionalen Datenfeldes bestimmt wird und Hologrammmusterpunkte mit dem modulierten Hologrammerzeugungslasereinzelstrahl auf einen dem zu identifizierenden Artikel zugeordneten Hologrammträger Punkt für Punkt übertragen werden, um die Artikel so anhand des aus dem zugeordneten Hologrammträger reproduzierten Intensitätsmusters identifizierbar zu machen.

Damit hat die vorliegende Erfindung erkannt, dass eine Individualisierung der Produktinformation einfach realisierbar ist, wenn ein zur Identifikation verwendbares Intensitätsmuster bestimmt und ein Hologramm hieraus berechnet wird, welches in einen dem Produkt zugeordneten beziehungsweise zuzuordnenden Datenträger unter Verwendung eines modulierten Einzelstrahles eingeschrieben wird. Damit wird mittels einfacher Schritte die Verwendung von Hologrammen zur Produktidentifikation wesentlich verbessert.

Es kann vorgesehen sein, daß das erste Intensitätsmuster auf der Basis individueller Bilder, beispielsweise des Benutzers einer Scheckkarte oder dergleichen oder auf der Basis von Daten, beispielsweise einer Chargennummer bestimmt wird. Einleuchtenderweise kann auch eine Kombination von Bildern und Daten, beispielsweise ein Paßbild, Kontoinformationen, Geburtstage und dergleichen gemeinsam für das Hologram zur Bestimmung des ersten Identitätsmusters herangezogen werden. Die Daten können dabei codiert werden und in ein Intensitätsmuster binär umgesetzt werden; wichtig ist jedoch in einer bevorzugten Variante die Individualisierung durch die Daten.

Dem Intensitätsmuster wird zunächst in einem bevorzugten Ausführungsbeispiel ein Hologramm in Arrayform zugeordnet. Das Intensitätsmuster-Array kann dabei unter Zugrundelegung und zweidimensionaler Anordnung serieller Daten bestimmt werden, und/oder das Intensitätsmuster wird, gegebenenfalls nach Umsetzung in Grauwerte wie erforderlich pixelweise gerastert. Das Hologramm kann als Fourierhologramm in per se bekannter Weise bestimmt werden. Es ist bevorzugt, wenn das Hologramm ein verglichen zum Ausgangsintensitätsmuster zur Vermeidung von Aliasing-Effekten wenigstens doppelt so großes Array umfasst, insbesondere, aber nicht zwingend in jeder linearen Richtung.

Das Hologramm wird bevorzugt ein Hologramm mit mehreren Grauwertstufen darstellen.

Bei Einspeicherung des Hologrammes als Grauwerthologramm kann ausgenutzt werden, daß die zu speichernden Daten lediglich in dem Intensitätsmuster enthalten sein brauchen. Zur Bestimmung eines Hologrammes ist jedoch nicht nur Information über die Helligkeit, das heißt die räumliche Intensitätsverteilung eines Musters oder Objektes erforderlich, sondern vielmehr auch Information über die Phasenlage, die eine vorgegebene Lichtwelle am Objekt haben soll.

Bei Berechnung der Hologramme z.B. als Fourierhologramme ist es nun möglich, ein beliebiges Phasenmuster willkürlich vorzugeben. Dies ist ein wesentlicher Unterschied gegenüber der Belichtung beispielsweise in der herkömmlichen optischen Zweistrahlholographie. Die Erfindung schlägt nun dies ausnutzend in einer bevorzugten Ausführungsform vor, die zu dem Intensitätsmuster willkürlich hinzuzunehmende Phase, das heißt das Phasenmuster so zu bestimmen, daß eine weitgehende Vergleichmäßigung der Grauwerte über die Hologrammfläche erreicht wird; ohne eine solche vergleichmäßigung ist an bestimmten, typisch zentralen Stellen des Hologrammes eine sehr starke Belichtung, d.h. Trägermaterialveränderung, erforderlich, während an anderen Stellen nur eine geringe Belichtung benötigt wird. Dies erfordert einerseits eine sehr große Dynamik bei der Einspeicherung und andererseits führt eine Zerstörung der Zentralstelle beim Auslesen zu einem großen Kontrast- und/oder Informationsverlust im aus dem Hologramm reproduzierten Intensitätsmuster, d.h. im Reproduktionsmuster. Diese Nachteile können durch die erfindungsgemäße Hologramm-Grauwert-Vergleichmässigung ausgeglichen werden. Dies entspannt die Anforderungen an die Belichtungs(bzw. Bestrahlungs-)Vorrichtung und an das Hologrammträgermaterial gleichermaßen.

Als Maß für die Vergleichmäßigung der Hologrammintensität über die Fläche und somit die erfidnungsgemäße Geeignetheit des zuzuorndnenden Phasenfeldes kann z.B. die Varianz der jedem Hologramm-Punkt zugeordneten Intensität (d.h. des Grauwertes) über die Hologrammfläche sein. Hologramme mit allgemein geringerer Grauwertvariablität sind erfindungsgemäß zu bevorzugen. Die erfindungsgemäße Individualisierung erlaubt es auch, aus ein und demselben Intensitätsmuster unter Heranziehung unterschiedlicher Phasenmuster Hologramme zu bestimmen, jeweils die Vergleichmäßigung der Hologrammintensität zu bestimmen dann ein Hologramm mit besonders ausgeprägter Vergleichmäßigung auszuwählen.

Damit verbessert sich das gesamte Signal/Rauschverhältnis und es wird ein geringeres Maß an Information in einem einzigen Bereich abgelegt. Dies erhöht die Zerstörungssicherheit des Hologrammes bei der späteren Produkthandhabung, beispielsweise beim Transport von Paketen, wenn das produktidentifizierende Hologramm ein Paketlabel darstellt.

Das mit dem Intensitätsmuster bei der Hologrammberechnung gemeinsam zu verarbeitende Phasenmuster, welches bei Intensitätsmuster-Arrays dieselbe Größe wie das Intensitätsfeld besitzen wird, kann überdies so gestaltet werden, daß im aus dem Hologrammm reproduzierten Intensitätsmuster, das heißt dem Reproduktionsmuster Artefakte auftreten. Insbesondere wird es bevorzugt, ein Phasenmuster zu verwenden, welches periodische Artefakte im Reproduktionsmuster erzeugt. Es ist weiterhin besonders bevorzugt, das Intensitätsmuster so zu verändern, daß an den Artefaktstellen keine Intensitätsinformation eingespeichert werden braucht, sondern die Stellen der erwarteten und gewünschten Artefakte intensitätsinformationsfrei bleiben. Dies kann gegebenenfalls erreicht werden, indem abzuspeichernde, zur Produktinformation bzw. Artikelidentifikation herangezogene Basisdaten bei der Bestimmung des Hologrammes entsprechend um die erwarteten Artefaktstellen gruppiert werden, wobei gegebenfalls ein entsprechender Sicherheits-Abstand um die Artefaktstellen eingehalten wird.

Die Zufügung eines Artefakt erzeugenden und insbesondere zugleich Grauwert vergleichmäßigenden Phasenmusters zum Intensitätsmuster ist bevorzugt, weil die Artefakte ohne weiteres in einem Reproduktionsmuster identifiziert werden können und dann das reproduzierte Muster anhand der Artefakte skaliert und/oder orientiert werden kann. Beispielsweise ist es möglich, ein Phasenmuster zu verwenden, welches ein gitterförmig periodisches Artefaktenreproduktionsmuster erzeugt. Die Abstände der Artefaktpunkte, die ohne weiteres identifiziert werden können, sind dann zur Skalierung heranziehbar.

Es ist möglich, einen Datenträger entweder auf dem Produkt unmittelbar zu belichten beziehungsweise das Produkt als zur Belichtung der Echtheitsinformation einstückig mit dem Datenträger zu verbinden oder, alternativ, einen Datenträger wie ein selbstklebendes Label erst zu belichten und dann auf dem Produkt anzubringen. Als Datenträgermaterial kommt insbesondere ein selbstklebendes Polymermaterial in Frage, insbesondere ein gestrecktes Polymer. Verwiesen wird in diesem Zusammenhang insbesondere auf die in der Deutschen Gebrauchsmusteranmeldung 298 16 802.2 aufgeführten Materialien.

Schutz wird auch für den Datenträger sowie ein Produkt mit einem Datenträgerbereich gemäß den darauf bezogenen Ansprüchen beansprucht.

Die Erfindung wird im folgenden nur beispielsweise unter Bezugnahme auf die beifügte Zeichnung erläutert. In dieser zeigt:
- Fig. 1: ein beispielhaftes Intensitätsmuster;
- Fig. 2: eine zu dem Intensitätsmusterfeld von Fig. 1 gehörige Zufallsphase;
- Fig.3: das mit Zufallsphase Grauwert vergleichmäßigte Hologramm;
- Fig. 4: das Reproduktionsmuster mit eingefügten Bewer- tungskennziffern;
- Fig. 5: ein weiteres Phasenmuster;
- Fig. 6: das zu dem Intensitätsmuster von Fig. 1 und dem Phasenmuster von Fig. 5 gehörige Holo- gramm;
- Fig. 7: das Reproduktionsmuster zum Hologramm von Fig. 6;
- Fig. 8: eine Anordnung zur Erzeugung eines Hologramms zur Artikelidentifikation.

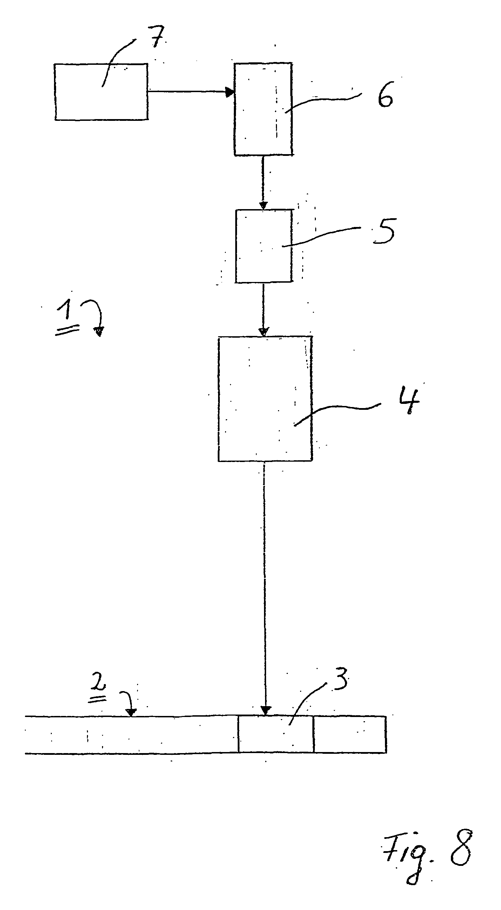

Nach Fig. 8 umfasst eine allgemein mit 1 bezeichnete Anordnung 1, mit der auf einem Artikel 2 ein Hologramm 3 zur Identifikation des Artikels 2 erzeugbar ist, einen Einzelstrahllaser 4, der von einer modulierten Leistungsversorgung 5 gespeist wird. Die Modulation der Leistungsversorgung 5 wird in einem Rechner 6 auf Grundlage von in diesen eingespeisten oder darin erzeugten Artikelidentifikationsdaten, visualisiert durch eine Fotographie 7 erzeugt.

Der Hologrammträger 3 besteht aus einem Polymermaterial, insbesondere einem solchen, wie im Gebrauchsmuster 298 16 802.2 offenbart.

Im nachfolgenden soll angegeben werden, wie das artikelidentifizierende Hologramm erzeugt wird.

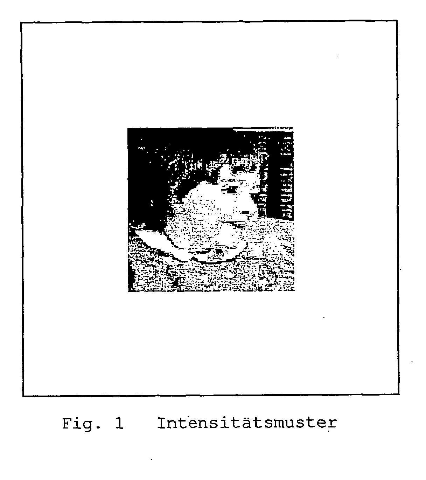

Dies geschieht unter Bezugnahme auf die Figuren 1 bis 7. Fig. 1 zeigt ein beispielhaftes Intensitätsmuster, wie es zur Artikelidentifikation verwendet werden kann.

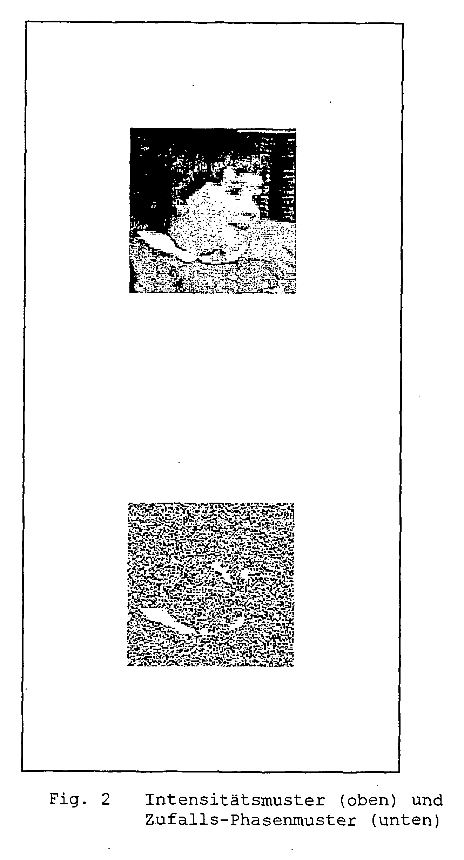

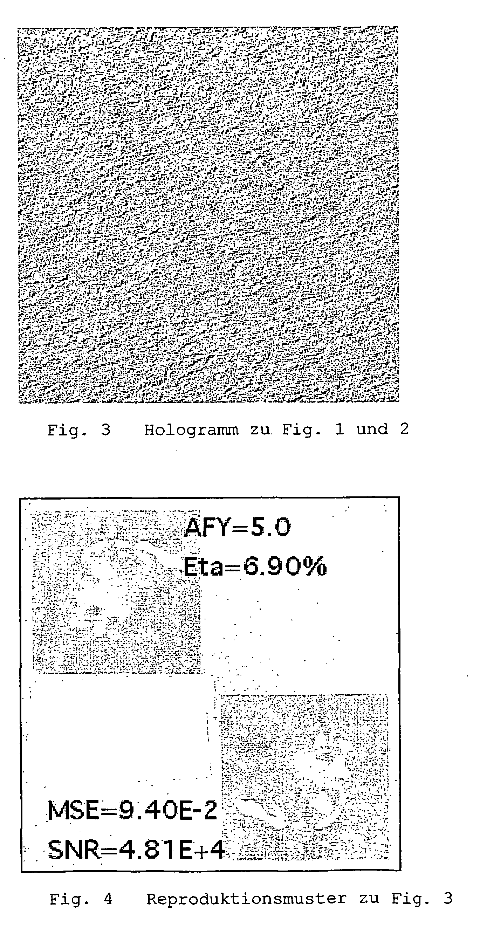

Diesem vorgegebenen Intensitätsmuster wird zunächst ein stochastisch erzeugtes Phasenfeld zugeordnet, vergleiche Fig. 2. Das mit diesem Phasenfeld auf per se bekannte Weise berechnete Fourier-Hologramm hat eine vergleichmäßigte Grauwertverteilung über das gesamte Hologrammfeld, vergleiche Fig. 3.

Das aus diesem Hologramm reproduzierte Intensitätsmuster, das Reproduktionsmuster, soll nun weitgehend dem anfänglichen Intensitätsmuster aus Fig. 1 entsprechen. Fig. 4 zeigt das mit der Zufallsphase von Fig. 2 erhaltene Reproduktionsmuster, wobei verschiedene Bewertungszahlen, insbesondere das Signal/ Rauschverhältnis, im Bild mit eingedruckt sind und das Bild bezüglich bestimmter Eigenschaften normiert ist. Es ist zu erkennen, daß der Kontrast nicht besonders hoch ist.

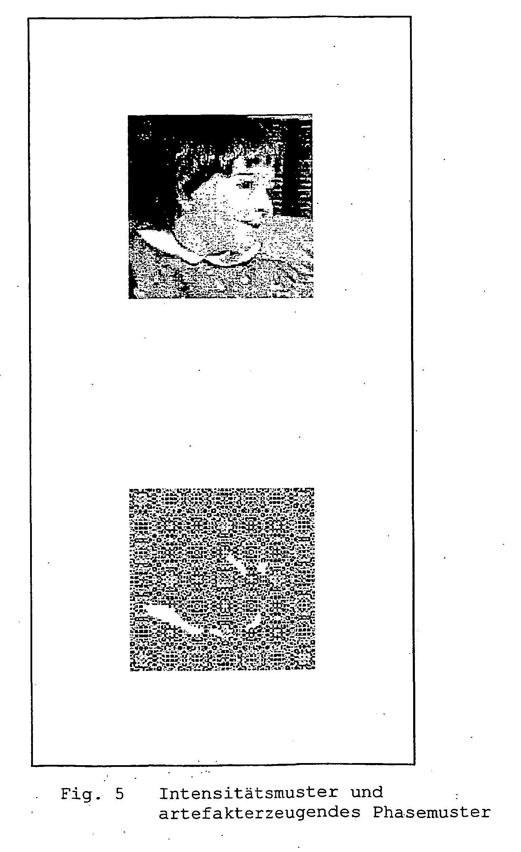

In Fig. 5 ist ein weiteres Phasenmuster gezeigt, welches anstelle der in Fig. 2 gezeigten Zufallsphase bei der Bestimmung des Hologrammes dem Intensitätsmuster zugeordnet werden kann. Es ist zu erkennen, dass das Phasenmuster periodische Strukturen aufweist, die überdies von den Periodenpunkten aus variieren.

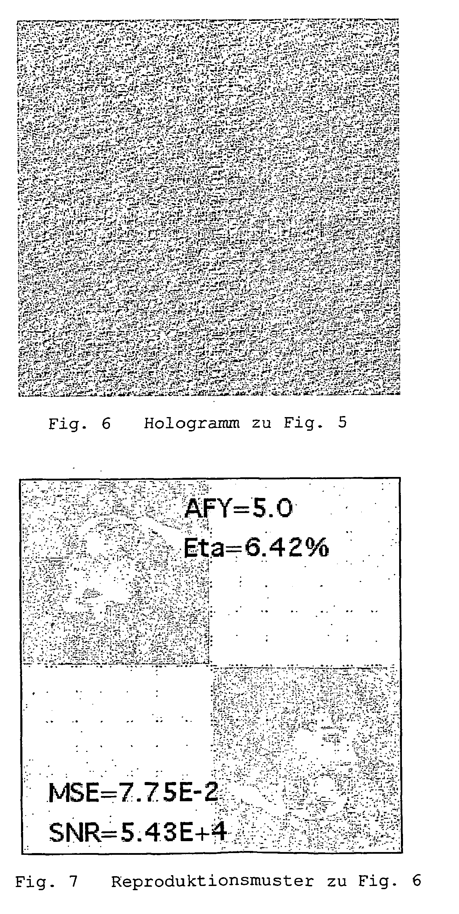

Das zu dem Phasenfeld von Fig 5 und der Abbildung von Fig. 1 zugehörige, berechnete Fourier-Hologramm ist in Fig. 6 gezeigt und es ist zu erkennen, dass sich die Periodizität des Phasenmusters in einer Periodizität des Hologramms auswirkt. Bei der Rekonstruktion der Intensitätsmuster aus dem einen periodischem Artefakt aufweisenden Phasenmuster wird das Muster von Fig. 7 als Reproduktionsmuster erhalten. Es zeigt sich, dass hier eine Reihe von periodisch auftretenden, gitterartig über das Bild verteilten Beugungsmaxima vorliegen, die zur Skalierung des Bildes verwendet werden können. Überdies ist im Reproduktionsmuster vom Fig.7 das Signal/Rauschverhältnis besser als in der Variante mit zufallsphase. Dies gilt, obwohl die Artefakte das Signal-Rauschverhältnis nominell verschlechtern und obwohl bereits durch die Zufallsphase eine Hologramm-Grauwert-Vergleichmäßigung eintritt. Es sei erwähnt, daß das Signal-Rauschverhältnis des Reproduktionsmusters ein sehr gutes Maß für die Qualität des verwendeten Phasenfeldes darstellt, besonders, wenn Bereiche mit bewußt erzeugten Artefakten außer Betracht gelassen werden. Dieses Signal-Rauschverhältnis kann anstelle oder zusätzlich zur Grauwertvariabilität als Maß für die Geeignetheit eines vorgegebenen Phasenmusters verwendet werden.

Das Beispiel zeigt, dass die Verwendung eines Phasenmusters mit Periodizität einerseits eher geeignet, eine Skalierbarkeit des Hologramms herbeizuführen und andererseits wird durch die vergleichmäßigung der Hologrammgrauwerte mit einem solchen Phasenmuster die zur sicheren Identifikation bei vorgegebenem Signal/ Rauschverhältnis erforderliche Fläche im vergleich zu anderen Phasenmustern deutlich verringert.

Das Verfahren der vorliegenden Erfindung kann daher verwendet werden, um besonders kleine Identifikationsflächen auf Artikeln verwendbar zu machen.

Anstelle von Polymermaterialien sind auch andere Medien verwendbar. Anstelle von Fourierhologrammen sind auch andere Hologrammtypen verwendbar.

## Patentansprüche

1. Verfahren zur Artikelidentifizierung, bei welchem Artikelidentifikationsdaten bereitgestellt und ein diesen entsprechendes Muster am Artikel vorgesehen wird, um den Artikel anhand des Musters zu identifizieren,
**dadurch gekennzeichnet, daß**
artikelidentifizierende Individualdaten einem zweidimensionalen Datenfeld zugeordnet,
ein Hologrammmuster unter Zugrundelegung des zweidimensionalen Datenfeldes digital berechnet,
eine Intensitätsmodulierung eines Hologrammerzeugungslasereinzelstrahles unter Zugrundelegung des zweidimensionalen Datenfeldes bestimmt wird und
Hologrammmusterpunkte mit dem modulierten Hologrammerzeugungslasereinzelstrahl auf einen dem zu identifizierenden Artikel zugeordneten Hologrammträger Punkt für Punkt übertragen werden, um
die Artikel so anhand des aus dem zugeordneten Hologrammträger reproduzierten Intensitätsmusters
identifizierbar zu machen.

2. Verfahren nach dem vorhergehenden Anspruch, **dadurch gekennzeichnet, daß** für gleiche Einzelartikel individuelle Artikelidentifikationsdaten bereitgestellt werden.

3. Verfahren nach einem der vorhergehenden Ansprüche, **dadurch gekennzeichnet, daß** die Artikelidentifikationsdaten Herstellungsangaben, Zusammensetzungen oder Echtheitsnachweise umfassen.

4. Verfahren nach dem vorhergehenden Anspruch, **dadurch gekennzeichnet, daß** das Hologrammmuster unter Verwendung der Individualdaten binär berechnet wird.

5. verfahren nach einem der vorhergehenden Ansprüche, **dadurch gekennzeichnet, daß** die Intensitätsmodulierung des Hologrammerzeugungsstrahles so bestimmt wird, daß sich ein Hologrammmuster mit mehreren Graustufen ergibt.

6. Verfahren nach dem vorhergehenden Anspruch, **dadurch gekennzeichnet, daß** den Individualdaten bei der Hologrammmusterberechnung eine vorbestimmte Phaseninformation zugeordnet wird.

7. Verfahren nach dem vorhergehenden Anspruch, **dadurch gekennzeichnet, daß** die Phaseninformation so gewählt wird, daß sich eine Graustufenvergleichmäßigung über die Hologrammmusterfläche ergibt.

8. Verfahren nach einem der vorhergehenden Ansprüche, **dadurch gekennzeichnet, daß** die Phaseninformation so gewählt wird, daß sich im aus dem Hologramm reproduzierten Intensitäts-Muster vorbestimmte Artefakte ergeben.

9. Verfahren nach dem vorhergehenden Anspruch, **dadurch gekennzeichnet, daß** k Individualdatenbits auf ein n*m großes zweidimensionales Datenfeldes mit k< m*n verteilt werden und bei den Positionen der vorbestimmten Artefakte keine Individualdatenbits, sondern Fülldatenbits bereitgestellt werden.

10. Verfahren nach einem der Ansprüche 8 oder 9, **dadurch gekennzeichnet, daß** die Artefakte so vorbestimmt werden, daß das reproduzierte Intensitätsmuster daran skalierbar und/oder orientierbar ist.

11. Verfahren nach einem der Ansprüche 8 bis 10, **dadurch gekennzeichnet, daß** die Artefakte periodisch angeordnet werden.

12. Verfahren nach dem vorhergehenden Anspruch, **dadurch gekennzeichnet, daß** ein insbesondere selbstklebender Hologrammträger beschrieben und auf dem Artikel angebracht wird.

13. Verfahren nach dem vorhergehenden Anspruch, **dadurch gekennzeichnet, daß** ein fest auf dem Artikel selbstklebender Hologrammträger beschrieben wird.

14. Verfahren nach einem der vorhergehenden Ansprüche, **dadurch gekennzeichnet, daß** als Material für die Einspeicherung des Hologrammes ein Polymermaterial verwendet wird, insbesondere ein gestrecktes Polymer.

## Claims

1. Method for identifying articles, in which article identification data is provided and a pattern corresponding to this data is applied to the article in order to identify the article by using the pattern, **characterized in that** article-identifying individual data is assigned to a two-dimensional data array, a hologram pattern is calculated digitally on the basis of the two-dimensional data array, an intensity modulation of a hologram-producing individual laser beam is determined on the basis of the two-dimensional data array and hologram pattern points are transferred point by point individual laser beam with the modulated hologram-producing to a hologram carrier assigned to the article to be identified, in order in this way to make it possible to identify the articles by using the intensity pattern reproduced from the associated hologram carrier.

2. Method according to the preceding claim, **characterized in that** for the same individual article, individual article identification data is provided.

3. Method according to one of the preceding claims, **characterized in that** the article identification data comprises production information, compositions or certificates of authenticity.

4. Method according to the preceding claim, **characterized in that** the hologram pattern is calculated in binary form by using the individual data.

5. Method according to one of the preceding claims, **characterized in that** the intensity modulation of the hologram-producing beam is determined in such a way that the result is a hologram pattern with a plurality of gray stages.

6. Method according to the preceding claim, **characterized in that** during the hologram pattern calculation, predetermined phase information is assigned to the individual data.

7. Method according to the preceding claim, **characterized in that** the phase information is selected such that the result is gray-stage homogenization over the area of the hologram pattern.

8. Method according to one of the preceding claims, **characterized in that** the phase information is selected such that the result is predetermined artifacts in the intensity pattern reproduced from the hologram.

9. Method according to the preceding claim, **characterized in that** k individual data bits are distributed to an n*m two-dimensional data array with k < m*n and, at the positions of the predetermined artifacts, filler data bits are provided instead of individual data bits.

10. Method according to either of Claims 8 and 9, **characterized in that** the artifacts are predetermined in such a way that the reproduced intensity pattern can be scaled and/or oriented on the basis thereof.

11. Method according to one of Claims 8 to 10, **characterized in that** the artifacts are arranged periodically.

12. Method according to the preceding claim, **characterized in that** a hologram carrier, in particular a self-adhesive hologram carrier, is written on and applied to the article.

13. Method according to the preceding claim, **characterized in that** a hologram carrier which itself adheres firmly to the article is written on.

14. Method according to one of the preceding claims, **characterized in that** the material used for the storage of the hologram is a polymer material, in particular a oriented polymer.

## Revendications

1. Procédé d'identification d'articles dans lequel on prépare des données d'identification d'articles et on prévoit un motif leur correspondant pour identifier l'article grâce au motif,
**caractérisé en ce que**
on affecte des données individuelles d'identification d'articles à un champ de données bidimensionnel,
on calcule numériquement un motif holographique en se basant sur le champ de données bidimensionnel,
on définit une modulation d'intensité d'un faisceau laser individuel de génération d'hologramme en se basant sur le champ de données bidimensionnel et
on transfère des points du motif holographique au moyen du faisceau laser individuel de génération d'hologramme point pour point sur un support holographique attribué à l'article à identifier
pour rendre ainsi les articles identifiables à l'aide du motif d'intensités reproduit à partir du support holographique correspondant.

2. Procédé selon la revendication précédente, **caractérisé en ce qu'**on prépare des données d'identification d'articles individuelles pour des articles isolés identiques.

3. Procédé selon une des revendications précédentes, **caractérisé en ce que** les données d'identification d'articles comportent des indications de fabrication, des compositions ou des preuves d'authenticité.

4. Procédé selon la revendication précédente, **caractérisé en ce que** le motif holographique est calculé numériquement en utilisant les données individuelles.

5. Procédé selon une des revendications précédentes, **caractérisé en ce que** la modulation d'intensité du faisceau de génération d'hologramme est définie de manière à produire un motif holographique avec plusieurs niveaux de gris.

6. Procédé selon la revendication précédente, **caractérisé en ce que** lors du calcul du motif holographique, on attribue une information de phase prédéfinie aux données individuelles.

7. Procédé selon la revendication précédente, **caractérisé en ce qu'**on choisit l'information de phase de manière à produire une modération des niveaux relatifs de gris sur la surface du motif holographique.

8. Procédé selon une des revendications précédentes, **caractérisé en ce qu'**on choisit l'information de phase de manière à produire des artefacts prédéfinis dans le motif d'intensités reproduit à partir de l'hologramme.

9. Procédé selon la revendication précédente, **caractérisé en ce qu'**on répartit k bits de données individuelles sur un champ de données bidimensionnel de taille n*m avec k< m*n et qu'aux emplacements des artefacts prédéfinis, on ne dispose d'aucun bits de données individuelles, mais de bits de données de remplissage.

10. Procédé selon une des revendications 8 ou 9, **caractérisé en ce qu'**on définit les artefacts de manière à pouvoir y mettre à l'échelle et/ou orienter le motif d'intensités reproduit.

11. Procédé selon une des revendications 8 à 10, **caractérisé en ce que** les artefacts sont agencés périodiquement.

12. Procédé selon la revendication précédente, **caractérisé en ce qu'**on décrit notamment un support holographique autocollant qu'on fixe sur l'article.

13. Procédé selon la revendication précédente, **caractérisé en ce qu'**on décrit un support holographique autocollant solidement sur l'article.

14. Procédé selon une des revendications précédentes, **caractérisé en ce qu'**on utilise un matériau polymère notamment un polymère étiré comme matériau pour mémoriser l'hologramme.
